Europäisches Patentamt

European Patent Office

Office européen des brevets

(19)

(11) Publication number: **0 006 631**
**B1**

(12) **EUROPEAN PATENT SPECIFICATION**

(45) Date of publication of patent specification: **30.06.82**

(51) Int. Cl.³: **G 11 B 23/02, G 11 B 5/012**

(21) Application number: **79102190.0**

(22) Date of filing: **29.06.79**

(54) Disk storage apparatus.

(30) Priority: **05.07.78 US 922255**

(43) Date of publication of application:
**09.01.80 Bulletin 80/1**

(45) Publication of the grant of the patent:
**30.06.82 Bulletin 82/26**

(84) Designated Contracting States:
**DE FR GB**

(56) References cited:
**CH - A - 529 412**
**DE - B2 - 1 909 485**
**FR - A - 2 212 592**
**GB - A - 1 458 286**
**US - A - 3 624 624**

**IBM Technical Disclosure Bulletin
Vol. 20, No. 10, March 78
pages 4104 and 4105.**

(73) Proprietor: **International Business Machines
Corporation
Armonk, N.Y. 10504 (US)**

(72) Inventor: **Avina, Raymond
19600 Graystone Lane
San Jose, California 95120 (US)**
Inventor: **Merrill, Patrick Foster
12155 Steffs Court
San Martin, California 95046 (US)**

(74) Representative: **Petersen, Richard Courtenay
IBM United Kingdom Patent Operations Hursley
Park
Winchester Hants. SO21 2JN (GB)**

Courier Press, Leamington Spa, England.

## Disk storage apparatus

This invention relates to disk storage apparatus having a multiplicity of magnetic disks and movable heads for accessing associated surfaces of the disks.

One well known design of a magnetic disk file data storage apparatus disclosed in IBM Technical Disclosure Bulletin, Vol. 20, No. 10, March 1978, pages 4104 and 4105, has interchangeable, replaceable disk packs containing a plurality of magnetic disks. The disks are accessed by head arm assemblies mounted to a carriage that is actuated by a voice coil motor. The head assemblies, head carriage and voice coil motor are disposed in a housing external to the disk pack.

In this type of design, the spindle assembly is bolted to the baseplate. The interchangeable disk pack, which contains the hub and disks, is removably attached to one end of the spindle shaft, with the spindle drive pulley attached to the other end. Spindle bearings are located near the ends of the spindle housing, thus leaving a length of unsupported shaft. The head carriage assembly is mounted to the baseplate through ways and rails.

Another disk file apparatus, as disclosed in U.S. Patent 3,786,454, has an interchangeable sealed cartridge that encloses magnetic disks, accessing head arm assemblies, a movable head carriage, a drive spindle for rotating the disks, and a common frame structure to maintain alignment between the cartridge components. This is an improvement over the aforementioned apparatus in that the same accessing head is associated with the same disk surface so that the same relationship is maintained for the repetitive accessing accomplished between each head and disk surface. This arrangement allows increased track density as well as greater bit density on each disk surface thereby realizing improved data storage capacity while utilizing less physical space.

Another disk storage apparatus is disclosed in U.S. Patent 4,034,411, in which the disk storage apparatus comprises an enclosure within which the magnetic heads and disks are enclosed with the head carriage and a linear actuator coil, that is permanently attached to the carriage within the enclosure. In this apparatus, the generally difficult mechanical coupling required between the head carriage and the voice coil is alleviated resulting in a decided improvement in alignment between the accessing heads and the rotating disks.

However, as more data is packed into lesser space in rotating disk file systems, the apparatus becomes more sensitive to mechanical resonances, thermal variations and contaminated air, which could lead to erroneous readout of data.

In FR—A—2,212,592 (GB—1,412,479), there is disclosed magnetic disk storage apparatus comprising a stack of magnetic disks on a common shaft, two linear actuators disposed diametrically opposite each other relative to the shaft, and a set of magnetic heads coupled to each actuator and movable to access associated surfaces of the disks. The apparatus is enclosed in a shroud which provides channels for circulating air diverted from between the disks by spoiler.

To reduce the weight and size of the apparatus and to solve the problem of minimising run out and reducing track misregistration, it is now proposed that the two actuators and sets of heads be equally offset relative to a central plane normal to the shaft axis.

It has now been found desirable to provide a supply of filtered air under pressure to the enclosure to remove contaminants and regulate temperature. In US—3,624,624, it has been proposed to mount a magnetic storage drum in bearings in an enclosure to which filtered air under pressure is supplied. A positive pressure is maintained in the bearing region to force contaminated air through vents to atmosphere. In the case of rotating disks, however, the rotation of the disk assembly reduces the pressure in the bearing region and there is a danger of air within the enclosure being drawn through the bearings, there contaminated by lubricant, and passing onto the disks. To solve this problem, it is now proposed to provide by-pass ports to vent air in the enclosure to the disk region without passing through the bearings.

Accordingly, the invention provides disk storage apparatus comprising a multiplicity of magnetic disks carried by a spindle having a longitudinal axis about which it is rotatable, first and second linear actuators disposed diametrically opposite each other relative to the spindle axis a set of magnetic heads for transducing operation with magnetic disk surfaces, coupled to each actuator for accessing associated surfaces of the disks, and an enclosure for the disk and actuator assembly, characterised in that the disks are arranged symmetrically on either side of a central plane (c) normal to the spindle axis, the actuators are offset equally relative to the central plane, the sets of heads are arranged for transducing operation with disk surfaces on opposite sides of the central plane, the spindle is mounted in bearings in a disk housing supported within the enclosure to which filtered air under pressure is supplied, and by-pass ports are provided for a bearing to reduce flow air through the bearing to within the housing.

Preferably, the ports are disposed circumferentially about the spindle.

Advantageously, a sealing cap is attached to the housing to seal the other bearing from ambient air. If the bearings and the housing having different coefficients of thermal expansion, it is of advantage that metal rings are mounted between the housing and the bearings, the coefficient of thermal expansion of the rings being between those of the housing and the bearings.

In DE—1,909,485 and GB—1,258,276, there is disclosed a magnetic disk storage apparatus in which the disks are carried by a hub of aluminium mounted on a shaft of hardened steel by a sleeve of steel having a coefficient of expansion between that of aluminium and hardened steel.

The described disk storage apparatus according to the invention is one in which thermal and vibrational effects are minimized, and in which air contamination within the enclosure is effectively reduced to ensure longer life of the enclosed components.

The scope of the invention is defined by the appended claims; and how it can be carried into effect is hereinafter described with reference to the accompanying drawings in which:—

Figure 1 is a broken, exploded perspective view of disk storage apparatus according to this invention;

Figure 2 is a sectional view, on the lines II—II of Fig. 3, of the disk drive incorporated in the apparatus of Fig. 1; and

Figure 3 is a view partly in section on the line III—III of Fig. 2 of the disk drive.

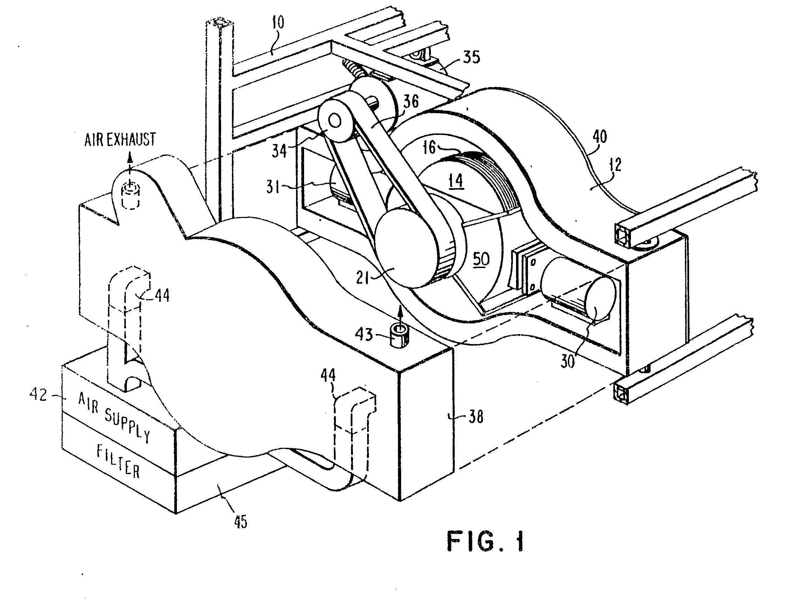

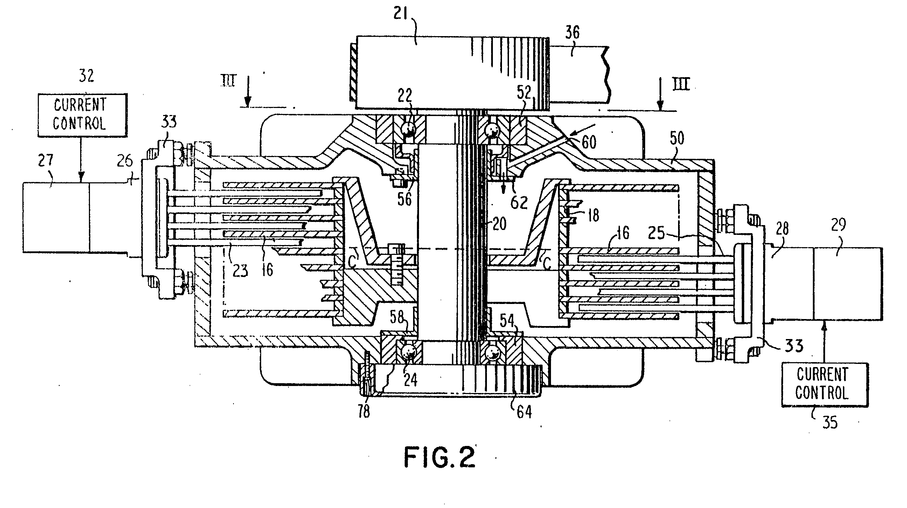

A magnetic disk drive apparatus comprises a housing frame 10 (Fig. 1) on which is mounted an open-sided casing 12 having what may be described as a bowtie cross section. Within the casing 12 is a head/disk assembly 14 which includes a plurality of data storage disks 16 mounted on a composite hub 18 (Fig. 2) secured to a spindle 20 rotatably mounted on ball bearings 22 and 24 in a housing 50. The spindle 20 projects from the housing 50 on one side and carries a pulley 21 coupled to a pulley 34 (Fig. 1) by a belt 36. The pulley 34 is secured to the shaft of a motor 35 carried on the frame 10.

In the embodiment shown, there are nine equally spaced disks 16, disposed symmetrically on either side of a central plane C normal to the axis of the spindle 20 through the central disk 16.

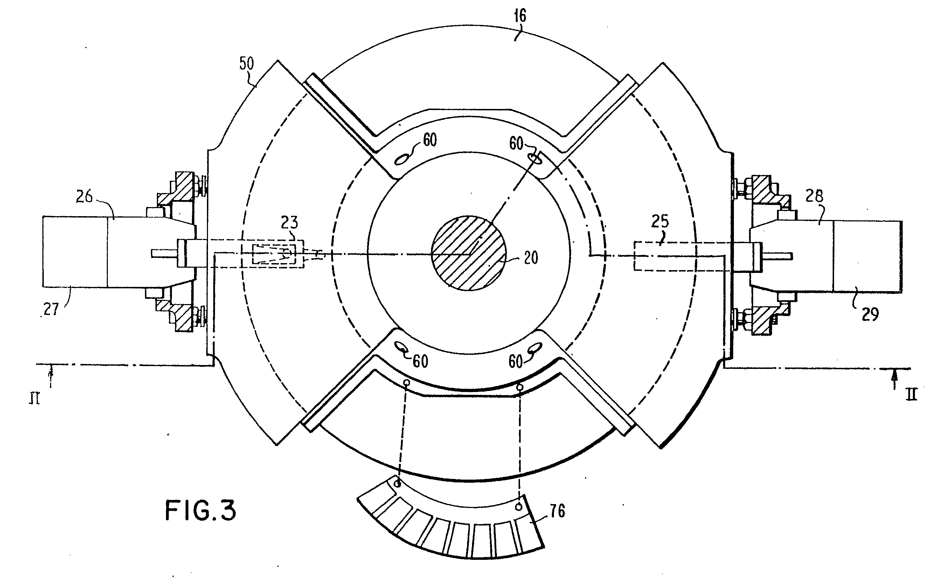

Two linear actuator devices in the form of voice coil motors 30 and 31 (Fig. 1) are mounted in the casing 12 on the housing 50, diametrically opposite each other in relation to the axis of the spindle 20 and equally spaced on opposite sides of the central plane C. The voice coil motors 30 and 31 are of the well known long coil, narrow gap type and each includes a permanent magnet structure (not shown in Fig. 2) having a central tubular portion and an outer annular portion, between which portions is a gap within which an annular voice coil is movable. The motor 30 has a coil 27 (Fig. 2) and the motor 31 a coil 29. The voice coils 27 and 29 are carried upon respective assemblies 26 and 28 guided for limited linear movement on the central tubular portions (not shown) of the permanent magnet structures, which are adjustably mounted on the housing 50 by collars 33 (Figs. 2 and 3). The assemblies 26 and 28 carry respective sets of four head arms 23 and 25. Each head arm carries four magnetic transducing heads (not shown) and projects between two disks 16 for operative association of the heads with respective surface of adjacent disks. Thus, except for the outer surfaces of the outermost disks 16, all surfaces are associated with magnetic heads, movable to select appropriate tracks thereon. The opposite surfaces of the central disk 16 are associated with heads on arms 23 and 25 respectively. Thus, there is a set of magnetic heads coupled to one voice coil motor for transducing operation with magnetic disk surfaces on one side of the central plane, and a second set coupled to the other motor for transducing operation with disk surfaces on the other side of the central plane.

Accessing of tracks on the surfaces is achieved by moving the assemblies 26 and 28 by independent control of current supplied to the respective coils 27 and 29 from current control circuits 32 and 35. The circuits 32 and 35 operate to pass a current of predetermined direction and magnitude to the respective voice coils 27 and 29 to enable rapid movement of the assemblies 26 and 28 and arms 23 and 25 to selected data tracks on selected disk surfaces. One voice coil motor enables access of the surfaces of the disks 16 which are to one side of a central plane C and the other motor enables access of the disk surfaces on the other side of the central plane C. The voice coil motors 30 and 31 are equally displaced on opposite sides of the plane C (Fig. 2) and diametrically opposite each other with respect to the spindle (Fig. 3). Each set of disks has a dedicated servo disk surface and associated servo head to provide precise track seek and track follow operations.

The disk drive apparatus thus far described is substantially similar to that disclosed in British Patent Application No. 2,005,454, French Patent Application No. 2,404,886 and German Patent Application No. 2,830,828 to which reference may be made for more detailed disclosure.

Shaped arcuate plates 76, of which one only is shown in Fig. 3, are disposed in cutout portions of the housing 50 and support racks of fixed heads positioned in a stepped or spiral fashion to co-operate with the outer disk surfaces. Means for loading and unloading the fixed heads into transducing relation with the data tracks is provided. Electronics is provided for the read, write and erase functions of the accessing heads and the fixed heads.

The casing 12 (Fig. 1) is enclosed by a front cover box 38 and a rear cover plate 40 to form a sealed, airtight enclosure. Ultra-clean air is supplied through ducts 44 to the box 38 from an air supply 42 housing a filter 45. The ducts 44 open into the casing 12 in the vicinity of the voice coil motors and air is exhausted through pipes 43 in the top of the box 38. The air supply is to remove contaminants and regulate temperature. The housing 50 is of aluminium to reduce overall weight. The spindle 20 is of stainless steel, and the ball bearings 22 and 24 are of steel composition. With this arrangement, temeprature changes that occur during operation of the disk drive will cause expansion or contraction of the mechanical parts. Because the thermal coefficients of expansion of aluminium and steel differ, the clearances between the bearing outer races and the bearing bores may change. Consequently, with an increase in clearance, there is a tendency for the spindle 20 to tilt and misalign relative to its central axis, which is orthogonal to the central plane. Misalignment of the spindle causes misregistration of the heads with their associated disk surfaces, leading to erroneous readout of data.

Stainless steel rings 52 and 54 are placed between the aluminium housing 50 and the respective ball bearings 22 and 24. The rings 52 and 54 are about 15 millimetres thick. The coefficient of thermal expansion of the steel material of the rings is of such that expansion and contraction differentials between the aluminium housing bearing bore and the steel bearings outer race are effectively minimized. Thus, the problems associated with bearing shift due to thermal variations are alleviated.

To prevent air from entering the housing 50 (Fig. 2) through the bearings 22 and 24, annular seals 56 and 58 are secured to the housing and engage the spindle 20 within the housing.

During operation of the disk drive, the rotation of the spindle 20, hub 18 and disks 16 changes the pressure within the housing 50 to a level less than that in the rest of the enclosure, which is pressurized above atmospheric with ultra clean air derived from the filtered air supply 42. The differential in pressure is such that the annular seals 56 and 58 are not totally effective in preventing air from entering the housing 50 through the bearings 22 and 24. It will be appreciated that lubricant in the bearings is taken up by air passing therethrough, which not only contaminates the air but also causes more frequent maintenance to replace lubricant lost from the bearings.

Accordingly, a series of by-pass ports 60 (Figs 2 and 3) are disposed circumferentially at one end of the housing 50 facing the air supply 42. The ports 60 allow the cavity between the annular seal 56 and the bearing 22 adjacent the pulley 21 to become pressurized to the same level as the enclosure. The seal 56 has corresponding aperture 62.

The resultant air flow developed by the presence of the pressurizing ports 60 is predominantly through the annular seal 56 with a relatively small amount of air flowing through the bearing 22. Thus, contaminated air is effectively blocked from passing through the bearing, Thereby realising longer life for the bearing lubricant and the bearing itself.

A sealing cap 64 is attached to the housing 50 by screws 78 over the aperture into which the ring 54 and bearing 24 are fitted. This leaves a very small free volume between the seal 58 and the cap 64. As the spindle, hub and disks to rotate and start up, the air in the free volume is evacuated, due to the negative pressure generated by the rotating parts. The evacuation proceeds until a state of equilibrium is reached. consequently, with steady state rotation during operation of the disk drive, no additional air enters the free volume, and there is no air flow through the bearing 24. Thus, the life of the bearing and its lubricant are extended, and less maintenance and repair are required.

By virtue of the substantially symmetrical configuration that is provided, vibrational and resonance effects are effectively minimized. The hub 18 is centrally located and attached to the spindle 20 between the spindle bearings 22 and 24. The housing 50 is adjustably centred in three planes within the casing 12. There is minimal tilt of the hub spindle assembly so that the disks are properly aligned to their respective accessing heads.

In the disk file described, the linear actuators are mounted within a substantially symmetrical housing having a neutral plane which divides opposing parts of the housing into substantially symmetrical parts. The stack of disks is coupled for rotation to the spindle, with the spindle axis perpendicular to the neutral plane, while the centre of gravity of the disk stack is located in its central plane which is substantially coincident with the neutral plane.

The symmetrical arrangement with offset actuators affords independent accessing to disks disposed on either side of the central plane in which the centre of gravity of the head/disk assembly is substantially located. Compensation for temperature variations is provided to prevent spindle tilt and head to disk misalignment. Airflow and air pressure are effectively controlled to substantially eliminate contamination and to minimize vibration and resonance effects. By virtue of this configuration, a compact disk drive which can process high density data in closely spaced data tracks is made possible.

## Claims

1. Disk storage apparatus comprising a multiplicity of magnetic disks (16) carried by a spindle (20) having a longitudinal axis about which it is rotatable, first and second linear actuators (30, 31) disposed diametrically opposite each other relative to the spindle axis, a set of magnetic heads for transducing operation with magnetic disk surfaces, coupled to each actuator for accessing associated surfaces of the disks, and an enclosure (12, 38, 40) for the disk and actuator assembly, characterised in that the disks are arranged symmetrically on either side of a central plane (c) normal to the spindle axis, the actuators are offset equally relative to the central plane, the sets of heads are arranged for transducing operation with disk surfaces on opposite sides of the central plane, the spindle is mounted in bearings (22, 24) in a disk housing (50) supported within the enclosure to which filtered air under pressure is supplied, and by-pass ports (60) are provided for a bearing (22) to reduce flow of air through the bearing to within the housing.

2. Disk storage apparatus according to claim 1, in which the ports (60) are disposed circumferentially about the spindle (20).

3. Disk storage apparatus according to claim 1 or 2, in which a sealing cap (64) is attached to the housing to seal the other bearing (24) from ambient air.

4. Disk storage apparatus according to claim 1, 2 or 3, in which bearings (22, 24) and the housing (50) having different coefficients of thermal expansion and metal rings (52, 54) are mounted between the housing and the bearings, the coefficient of thermal expansion of the rings being between those of the housing and the bearings.

**Patentansprüche**

1. Plattenspeichergerät mit einer Vielzahl magnetischer Platten (16) auf einer Spindel (20), die eine Längsachse hat, um welche sie drehbar ist, erste und zweite lineare Zustellvorrichtungen (30, 31) die diametral und in Bezug auf die Spindelachse sich gegenüberstehend angeordnet sind, ein Satz von Magnetköpfen für Übertragungsoperationen in Bezug auf die Oberflächen der Magnetplatten, wobei jeder Satz mit einer Zustellvorrichtung verbunden ist, um Zugriff zu den zugeordneten Plattenflächen nehmen zu können, und einem Gehäuse (12, 38, 40) für die Platten- und Zustell-Vorrichtung, dadurch gekennzeichnet, daß die Platten symmetrisch auf beiden Seiten einer zentralen Ebene (c), die senkrecht zur Spindelachse ist, angeordnet sind, die Betätigungsvorrichtungen gleichförmig in Bezug auf die zentrale Ebene versetzt sind, die Sätze von Köpfen für die Übertragungsoperationen mit den Plattenflächen auf entgegengesetzten Seiten der zentralen Ebene angeordnet sind, die Spindel in Lagern (22, 24) befestigt ist, die ihrerseits in einem Plattengehäuse (50) angeordnet sind, welches innerhalb des Gehäuses, zu dem unter Druck gefilterte Luft zugeführt wird, angeordnet ist, und bypass-Öffnungen (60) für ein Lager (22) vorgesehen sind, um den Luftfluß durch Lager in das Innere des Gehäuses hinein zu reduzieren.

2. Plattenspeichergerät gemäß Anspruch 1, bei dem die Öffnungen (60) umfangsmäßig um die Spindel (20) herum verteilt angeordnet sind.

3. Plattenspeichergerät gemäß Anspruch 1 oder 2, bei dem ein Dichtungsverschluß (64) dem Gehäuse zugeordnet ist, um das andere Lager (24) gegen die Umgebungsluft abzudichten.

4. Plattenspeichergerät gemäß Anspruch 1, 2 oder 3, bei dem die Lager (22, 24) und das Gehäuse (50) unterschiedliche thermische Ausdehnungskoeffizienten besitzen und Metallringe (52, 54) zwischen dem Gehäuse und den Lagern montiert sind, wobei der thermische Ausdehnungskoeffizient der Ringe zwischen denen des Gehäuses und der Lager liegt.

**Revendications**

1. Dispositif de mémorisation à disques comprenant de multiples disques magnétiques (16) portés par un arbre (20) ayant un axe longitudinal autour duquel il peut être entraîné en rotation, des première et deuxième unités de commande de déplacement linéaire (30, 31) diamétralement opposées l'une à l'autre par rapport à l'axe de l'arbre, un ensemble de têtes magnétiques pour effectuer des opérations de transduction en association avec les surfaces de disques magnétiques, couplé à chaque unité de commande pour accéder aux surfaces associées des disques et un boîtier (12, 38, 40) pour l'ensemble disques et unités de commande, caractérisé en ce que les disques sont disposés symétriquement de part et d'autre d'un plan central (c) normal à l'axe de l'arbre, les unités de commande étant décalées de façon égale par rapport au plan central, les ensembles de têtes sont disposés de façon à assurer des opérations de transduction en association avec des surfaces de disques sur les côtés opposés du plan central, l'arbre est monté dans des paliers (22, 24) compris dans un magasin de disques (50) disposé à l'intérieur du boîtier auquel est appliqué de l'air filtré sous pression, et des lumières d'évitement (60) sont prévues pour un palier (22) afin de réduire l'écoulement d'air au travers du palier vers l'intérieur du magasin.

2. Dispositif d'emmagasinage à disques selon la revendication 1 dans lequel les lumières (60) sont disposées circonférentiellement autour de l'arbre (20).

3. Dispositif d'emmagasinage à disques selon la revendication 1 ou 2 dans lequel un bouchon d'étanchéité (64) est fixé au magasin pour isoler l'autre pailer (24) de l'air ambiant.

4. Dispositif d'emmagasinage à disques selon la revendication 1, 2 ou 3 dans lequel les paliers (22, 24) et le magasin (50) présentent des coefficients de dilatation thermique différents, des anneaux métalliques (52, 54) sont montés entre le magasin et les paliers, le coefficient de dilatation thermique des anneaux étant compris entre ceux du magasin et des paliers.

FIG. 1

**FIG.2**

CURRENT CONTROL 35

CURRENT CONTROL 32

FIG.3

0 006 631